# FASCICULE DE BREVET EUROPEEN

(11) **EP 0 440 537 B1**
(45) Date de publication et mention de la délivrance du brevet: **10.05.1995**
(21) Numéro de dépôt: 91400183.9
(22) Date de dépôt: 28.01.1991
(51) Int. Cl.: C11B 3/02, A23L 1/015, C08B 37/00, A23C 15/14

(54) **Procédé de raffinage de mélanges issus de traitements de milieux gras à l'aide de cyclodextrine et comprenant des complexes de cyclodextrine avec des composés lipophiles du type acide gras**
Verfahren zur Raffinierung von durch Behandlung eines fetthaltigen Milieus mit Cyclodextrin erhaltenen Mischungen, die Komplexe von Cyclodextrin mit fettsäureartigen lipophilen Verbindungen enthalten
Process for refining mixtures resulting from treatment of fatty substances with cyclodextrin and containing complexes of cyclodextrin with fatty acid type lipophilic compounds

(30) Priorité: 29.01.1990 FR 9001008
(43) Date de publication de la demande: 07.08.1991
(73) Titulaire: Roquette Frères, F-62136 Lestrem (FR)
(72) Inventeur: Mentink, Léon, F-59940 Estaires (FR); Serpelloni, Michel, F-62660 Beuvry Les Bethune (FR)
(74) Mandataire: Boulinguiez, Didier

(56) Documents cités:
- US-A- 3 491 132
- DIE STÄRKE, vol. 27, no. 11, 1975, pages 368-376; J. SZEJTLI et al.: "Inclusion complexes of unsaturated fatty acids with amylose and cyclodextrin"

## Description

L'invention a pour objet un procédé de raffinage de mélanges issus de traitements de milieux gras à l'aide de cyclodextrine et comprenant des complexes de cyclodextrine avec des composés lipophiles du type acide gras.

Par l'expression "milieu gras", on désigne toute substance contenant des matières grasses, à savoir notamment les substances biologiques d'origine
- animale, comme les matières grasses du groupe comprenant le suif, le saindoux, le beurre concentré, les huiles de poissons, la graisse de laine, le sang, les matériaux céphalorachidiens, l'oeuf, le lait et leurs dérivés,
- végétale, comme les huiles végétales ou les colophanes.

Les cyclodextrines sont des molécules cycliques de polyanhydroglucose de conformation tubulaire tronconique délimitant une cavité hydrophobe. Selon qu'elles sont constituées de 6, 7 ou 8 motifs anhydroglucose, elles sont dénommées respectivement alpha-, bêta- ou gamma-cyclodextrine.

Dans un souci de simplification, on utilise ci-après le terme général "cyclodextrine" pour désigner l'une quelconque des cyclodextrines alpha, bêta ou gamma, un mélange de celles-ci, ou bien encore des dérivés de cyclodextrine.

La cyclodextrine est préparée par traitement d'amidon liquéfié avec une enzyme, la cyclodextrine glycosyl-transférase.

Du fait de sa structure torique particulière, la cyclodextrine a pour propriété de capter sélectivement, dans sa cavité hydrophobe, diverses espèces moléculaires et groupements réactionnels appartenant essentiellement à des substances lipophiles. L'affinité de ces substances lipophiles vis-à-vis de la cyclodextrine ( constante d'association) dépend de leur nature et de leur configuration chimique ainsi que de leur taille prise relativement par rapport à celle de la cavité de la cyclodextrine, dépendant elle-même du nombre de résidus de glucose.

Cette capacité naturelle complexante de la cyclodextrine commence à être mise à profit, notamment dans les secteurs de l'industrie alimentaire, de la pharmacie-cosmétologie ou de l'industrie en général.

Il a ainsi été envisagé d'utiliser la cyclodextrine dans des procédés d'une part d'élimination et de séparation de composés indésirables, d'autre part de récupération de composés à haute valeur ajoutée à partir de milieux gras biologiques.

Parmi ces procédés, on peut citer l'extraction d'acides gras de milieux gras biologiques tels que les huiles végétales glycéridiques (maïs, tournesol, colza, arachide, soja ou autres).

Ainsi, le brevet US n° 3.491.132 décrit un procédé visant à réduire la teneur en acides gras libres d'huiles glycéridiques à l'aide de β-cyclodextrine.

La cyclodextrine a également été utilisée pour la purification d'acides gras essentiels qui sont polyinsaturés et présentent de ce fait une affinité plus grande vis-à-vis de la cyclodextrine que les autres acides gras.

Dans ces procédés, la cyclodextrine est mise en contact, en présence d'eau, avec le milieu gras biologique contenant les acides gras à éliminer ou à purifier, la cyclodextrine étant incorporée en quantité suffisante pour former des complexes avec ces derniers. Une fois formés, les complexes se retrouvent dans la phase aqueuse qui est séparée de la phase grasse.

A l'échelle industrielle, ces résidus aqueux qui contiennent les composés à éliminer ou à purifier sont des produits d'extraction générés en très grande quantité. Il serait de l'intérêt des industriels mettant en oeuvre les susdits procédés ou utilisant comme matière première ces composés lipophiles, de pouvoir fractionner les susdits résidus aqueux pour récupérer sous une forme la plus pure possible, chacun de leurs constituants intéressants et notamment d'une part, la cyclodextrine qui pourrait ainsi être recyclée en vue d'abaisser les coûts de revient des procédés d'extraction, et d'autre part certaines substances lipophiles telles que des acides gras, rares ou essentiels (DHA, EPA, acide γ-linolénique, acide linoléique).

Dans un article intitulé "Inclusion complexes of unsaturated fatty acid with amylose and cyclodextrins" de Szejtli et al., "Die Stärke" n°11 du 2.7.1975, pages 368 à 376, il a été préconisé d'utiliser des mélanges eau/solvant hydrophile, comme l'éthanol, pour extraire des acides ayant été complexés avec de la cyclodextrine. Il y a lieu de souligner que le produit ainsi traité est simple puisqu'il ne contient que des complexes "cyclodextrine-acides gras" sans autres composés susceptibles d'interférer dans la décomplexation, comme ce serait le cas dans des milieux biologiques. Par ailleurs, le rendement de décomplexation est peu satisfaisant. Il est nécessaire de laver successivement cinq fois les complexes pour parvenir à extraire la majeure partie des acides gras inclus. Une telle méthodologie apparaît comme inapplicable industriellement, notamment du fait qu'elle est d'une part lourde à mettre en oeuvre, et d'autre part économiquement non rentable.

Le brevet US N° 3.491.132 mentionné plus haut décrit un procédé de décomplexation consistant à diluer à l'eau la phase aqueuse contenant les complexes et à porter l'ensemble à ébullition. Les liaisons entre la β-cyclodextrine et les acides gras se rompent et ces derniers peuvent être récupérés dans le surnageant.

La β-cyclodextrine reste dans la phase aqueuse et peut être recueillie sous forme solide après refroidissement.

L'inconvénient de ce procédé réside notamment dans le fait qu'il ne permet de récupérer qu'une faible proportion des acides gras présents dans le mélange initial contenant les complexes, la β-cyclodextrine étant donc imparfaitement purifiée et par suite difficilement recyclable car susceptible de polluer la matière grasse dans laquelle elle serait introduite.

Par ailleurs, ce procédé ne permet pas de recueillir de façon fractionnée les différents types d'acides gras plus ou moins liés avec la cyclodextrine.

Enfin, les rendements de purification obtenus par mise en oeuvre de ce procédé sont si faibles qu'ils le privent de tout intérêt industriel.

L'invention a pour but, surtout, de remédier à ces inconvénients inhérents à l'art antérieur.

Et la Société Demanderesse a eu le mérite de trouver, à l'issue de recherches approfondies, qu'il était possible de séparer et de purifier les différents corps constituant le mélange obtenu après traitement d'un milieu gras à l'aide de cyclodextrine en présence d'une certaine quantite de solvant, en soumettant ledit mélange à un traitement thermique en présence d'eau à une température supérieure à 100°C.

En conséquence, le procédé conforme à l'invention de raffinage de mélanges issus de traitements de milieux gras à l'aide de cyclodextrine est defini dans la revendication 1.

Ce traitement thermique en milieu aqueux a pour effet d'une part, de provoquer au moins partiellement la dissociation des complexes cyclodextrine/composés lipophiles et d'autre part, de libérer de leur liaison avec la cyclodextrine, les composés lipophiles non inclus.

Ces substances se séparent aisément de la cyclodextrine dont la majeure partie, par rapport à la quantité initialement mise en oeuvre, se trouve sous forme libre et est susceptible d'être directement recyclée, abaissant ainsi les prix de revient.

Outre la cyclodextrine, le procédé conforme à l'invention permet également de récupérer de manière fractionnée ou non les acides gras de départ.

Ces acides gras ou autres substances grasses peuvent être directement valorisés par utilisation comme matières premières dans la fabrication de produits alimentaires, cosmétiques ou autres. Il est également possible de faire subir à ces matières grasses des traitements de purification tels que la distillation moléculaire, ou de modification, comme la saponification ou l'estérification.

Les proportions respectives en mélange sec de départ à traiter et en système solvant varient de préférence de 0,10:1 à 1:1 parties en poids.

Il est avantageux de procéder à une agitation au moins préalablement au traitement thermique, voire pendant toute la durée de ce dernier, de manière à homogénéiser le mélange et le système solvant.

Des homogénéisateurs à piston du type ALMO ou à hélice du type ULTRATURAX ou tout autre dispositif approprié et connu en lui-même, peuvent être utilisés pour modifier les caractéristiques physiques du mélange de manière à optimiser son raffinage.

Conformément à l'invention, le traitement thermique est effectué à une température comprise entre 100 et 200°C, de préférence entre 100 et 150°C et, plus préférentiellement encore, entre 115 et 125°C.

La durée du traitement est de quelques secondes à quelques minutes, de préférence comprise entre 1 et 10 minutes et, plus préférentiellement encore, voisine de 5 minutes.

Selon une variante, le procédé conforme à l'invention comporte une étape préalable au traitement thermique, cette étape préalable consistant à porter le mélange de départ à une température comprise entre 30 et 100°C en présence du système solvant et à séparer du mélange ainsi traité les substances grasses les plus faiblement liées à la cyclodextrine.

Les substances grasses, essentiellement des acides gras, plus fortement liées sont libérées et récupérées après le traitement thermique conforme à l'invention.

Il devient ainsi possible de récupérer et de valoriser séparément les différentes fractions grasses.

Le système solvant est de préférence constitué exclusivement d'eau.

Mais il est également possible d'avoir recours à un système solvant composé d'eau et d'au moins un produit propre à améliorer les propriétés décomplexantes du système solvant et/ou à faciliter la séparation des constituants du mélange.

Avantageusement, ce produit est choisi dans le groupe comprenant les polyols, les sucres et les alcools.

De préférence, on a recours à un polyol du groupe comprenant le glycérol, le xylitol et le sorbitol, le glycérol étant tout particulièrement préféré car il permet d'améliorer de façon notable l'extraction des composés lipophiles du type acide gras ainsi que leur séparation de la phase aqueuse.

Le rapport eau/glycérol est de préférence compris entre 3:1 et 1:2 parties en poids et, plus préférentiellement encore, voisin de 1:1 parties en poids.

Pour séparer les différents raffinats issus du traitement thermique, on peut avoir recours à une décantation ou à une centrifugation; on obtient ainsi à chaud, au moins deux phases, dont la première est de nature grasse et de densité inférieure à celle du système solvant et constitue la phase surnageante, la seconde étant formée précisément par le système solvant (eau seule ou eau/produit) et contenant la cyclodextrine.

Eventuellement, on peut observer une troisième phase formée par le résidu non traité du mélange initial.

Il est à noter que la phase grasse, si elle n'est pas homogénéisée, peut être elle-même multiphasique compte tenu des substances grasses de différentes natures qui la constituent.

Pour récupérer la cyclodextrine, on refroidit la phase solvant à une température suffisamment basse (par exemple environ 4°C) pour que la cyclodextrine se solidifie. Les eaux-mères résiduelles peuvent être recyclées, notamment en tête du procédé selon l'invention.

Il est également possible d'évaporer le système solvant pour récupérer la cyclodextrine, le rendement étant alors meilleur; dans le cas où le système solvant est uniquement constitué d'eau, la cyclodextrine en solution peut être utilisée telle quelle.

Le résidu non traité qui se retrouve éventuellement sous la forme de la susdite troisième phase peut être recyclé.

Lorsque le produit favorisant la décomplexation est du type alcool, on peut, d'une part, effectuer le traitement thermique à plus basse température avec un rendement d'extraction identique à celui obtenu avec un système solvant constitué uniquement d'eau et, d'autre part, augmenter le rendement de récupération de la cyclodextrine par diminution de sa solubilité à froid.

Pour une concentration élevée en alcool, on observe qu'une partie des composés lipophiles du type acide gras sont dissous dans la phase hydroalcoolique.

Le procédé suivant l'invention peut être mis en oeuvre suivant un mode de fonctionnement statique ou dynamique.

Dans ces deux modes de fonctionnement, il est fait appel à des appareillages propres à travailler aux pressions élevées atteintes aux températures du traitement thermique.

Le mode de fonctionnement statique consiste à traiter un volume déterminé de mélange de départ, en présence du système solvant, en le portant à la température envisagée à l'aide d'un dispositif de chauffage, par exemple du type autoclave ou cuiseur vapeur, puis à séparer par décantation ou par centrifugation les différents constituants obtenus.

Le mode de fonctionnement statique est particulièrement avantageux lorsque:
- les quantités de mélange à raffiner sont faibles,
- le système solvant employé contient des substances particulièrement volatiles, comme par exemple les alcools ou le glycérol,
- l'on utilise les caractéristiques du système solvant non seulement pour extraire mais aussi pour fractionner les substances lipophiles en une partie solubilisée dans le système solvant et une autre insoluble.

Le mode de fonctionnement dynamique consiste à mettre le mélange de départ en circulation dans un dispositif de chauffage après homogénéisation avec le système solvant. Après le traitement thermique, le mélange est acheminé vers des moyens de séparation des différentes phases.

Ces derniers peuvent notamment être constitués par un dispositif du type décanteuse-centrifugeuse, de préférence autodébourbeuse à fonctionnement en continu.

Avantageusement, on peut avoir recours, dans le mode de fonctionnement dynamique, à un dispositif de cuisson par injection de vapeur ou convertisseur thermochimique, appelé communément "jet-cooker". De tels dispositifs sont traditionnellement utilisés pour la cuisson d'amidon de collage dans l'industrie du papier/carton.

A titre d'exemple, on peut citer le cuiseur commercialisé sous la dénomination cuiseur HI-CAT par la Société Demanderesse.

Le principe de ce dispositif est d'injecter de la vapeur d'eau dans un serpentin de cuisson à l'intérieur duquel circule le fluide à traiter thermiquement, à savoir le lait d'amidon dans les applications connues.

La vapeur d'eau est injectée de façon concourante au fluide. Elle détermine la pression à l'intérieur du circuit, cette dernière pouvant être régulée à l'aide d'une vanne de contrepression localisée au voisinage de l'extrémité de sortie dudit circuit.

La durée du traitement thermique dépend du volume du serpentin de cuisson et du débit du fluide.

A la sortie du serpentin, après détente dans un cyclone et évacuation de la vapeur, on récupère le fluide cuit.

Dans le cadre de son application au procédé suivant l'invention, le jet-cooker est équipé d'au moins une cuve de préparation dans laquelle le mélange de départ est homogénéisé avec le système solvant. Avantageusement, il comprend également, reliés à l'extrémité de sortie du serpentin, des moyens de séparation tels que ceux cités ci-dessus, à savoir une centrifugeuse autodébourbeuse à fonctionnement en continu du type de celle commercialisée par la Société Westfalia.

Il est ainsi possible de collecter à la sortie de la centrifugeuse les différents raffinats formés grâce au procédé conforme à l'invention, à savoir les composés lipophiles, les composés non-inclus, ou un mélange de ceux-ci, la cyclodextrine, et le résidu non traité qui peut être acheminé directement dans la cuve de préparation pour être recyclé en continu.

Toujours avantageusement, on peut utiliser dans le mode dynamique un échangeur thermique, par exemple à plaques tel que celui commercialisé par la Société Alfa-Laval sous la marque déposée "ALFA-FLEX", ces échangeurs pouvant être aussi à faisceau tubulaire ou à surface raclée.

Comme dans le cas de l'utilisation du jet-cooker, on a recours à au moins une cuve de préparation de l'homogénéisat comprenant le mélange de départ et le système solvant, cette cuve étant reliée à l'entrée de l'échangeur tandis que la sortie de ce dernier est connectée à des moyens de séparation en continu similaires à ceux décrits plus haut.

Suivant une variante, le traitement thermique, en fonctionnement dynamique, consiste en un traitement d'entraînement à la vapeur dans lequel on fait circuler de la vapeur d'eau au travers du mélange à raffiner homogénéisé avec le système solvant de manière à extraire les composés lipophiles du type acide gras.

Pour optimiser ce traitement, il est préférable de réaliser l'extraction sous vide et de faire circuler à contre-courant le mélange homogénéisé avec le système solvant et la vapeur.

Ce type de procédé d'entraînement à la vapeur ainsi que les dispositifs appropriés pour sa mise en oeuvre sont connus en eux-mêmes et sont largement employés, notamment pour la désodorisation de matières grasses animale ou végétale.

Conformément à l'invention, il peut être avantageux de combiner une ou plusieurs des variantes de ce mode de fonctionnement dynamique.

Les susdits exemples de dispositifs propres à chauffer le mélange de départ en présence du système solvant, de manière statique ou dynamique, ne sont pas limitatifs, tout autre dispositif procurant le même résultat pouvant convenir.

L'invention sera encore mieux comprise grâce aux exemples non limitatifs qui suivent et qui sont relatifs à des modes de réalisation avantageux.

### EXEMPLE 1

### 1. Traitement d'un milieu gras à l'aide de cyclodextrine.

De l'huile de maïs dont on a extrait au préalable les phospholipides (démucilagination) et qui présente un indice d'acide de 1,5 (exprimé en % d'acide oléique pour 100 g), est traitée à l'aide de de β-cyclodextrine (commercialisée par la Société Demanderesse sous la marque KLEPTOSE) en vue d'extraire les acides gras libres et les composés de dégradation contenus dans cette huile.

La β-cyclodextrine, qui se présente sous forme de poudre, est dispersée par agitation dans l'huile à traiter. On ajoute lentement de l'eau de façon à former par agitation et à température ambiante une émulsion grossière.

L'ensemble est ensuite homogénéisé par agitation à 13500 tours/ minute pendant 1 minute à l'aide d'un appareil de type UNIMIX. On obtient ainsi une émulsion fine de type huile dans eau, de texture semblable à une mayonnaise.

Cette émulsion est chauffée à 90°C avant d'être centrifugée à 6000 tours/minute pendant 5 minutes. Il se forme ainsi trois phases:
- une phase huileuse qui, après lavage à l'eau et séchage, présente un indice d'acide de 0,6,
- une phase aqueuse,
- un culot de centrifugation de couleur blanche.
C'est ce culot qui est soumis au traitement conforme à l'invention.

### 2. Raffinage du culot.

Le culot de centrifugation est mélangé à froid avec 2 kg d'eau. On obtient un lait qui est traité au moyen d'un cuiseur thermochimique du type de celui commercialisé par la Société Demanderesse sous la dénomination "HI-CAT", avec injection directe de vapeur d'eau.

La température dans le serpentin est de 120°C; elle est obtenue par le débit de vapeur. Le temps de passage dans le cuiseur est de 5 minutes. A la sortie du cuiseur, le mélange traité thermiquement est séparé en continu à l'aide d'une centrifugeuse à assiettes du type de celles commercialisées par la Société Westfalia. On obtient trois phases:
- une phase légère, composée de matières grasses, qui peut être utilisée en alimentation animale ou pour la production d'acides gras ou de savons,
- une phase lourde qui se présente sous la forme d'un culot et qui correspond au produit initial non traité; elle représente moins de 10% du produit de départ et peut être recyclée au niveau du traitement thermique,
- une phase aqueuse de densité intermédiaire qui contient en solution, à chaud, 90% de la β-cyclodextrine présente initialement dans le culot à raffiner; cette phase aqueuse peut être utilisée pour le traitement d'une nouvelle quantité d'huile dont on a extrait au préalable les phospholipides, ou être refroidie lentement jusqu'à 4°C de manière à obtenir des cristaux de β-cyclodextrine séparables par simple filtration.

### EXEMPLE 2

### 1. Traitement d'un milieu gras à l'aide de cyclodextrine.

Un mélange d'acides gras de foie de morue est traité par une solution hydroalcoolique de β-cyclodextrine de façon à extraire les 15% en poids d'acides gras polyinsaturés en C₁₈, C₂₀ et C₂₂ contenus dans le mélange.

On disperse 100 g d'acides gras de foie de morue dans 1 litre de solution éthanolique à 70%.

On ajoute à cette dispersion 30 g de β-cyclodextrine (commercialisée par la Société Demanderesse sous la marque KLEPTOSE).

L'ensemble est mélangé à la température ambiante pendant 10 minutes, puis laissé au repos pendant 2 heures à 4°C. Il se forme 28 g (sur sec) d'un précipité qui contient environ 12% en poids d'acides gras dont 70% sont les susdits acides gras polyinsaturés, et qui est séparé par filtration.

Ce précipité constitue le mélange qui est destiné à être raffiné par le procédé conforme à l'invention.

### 2. Raffinage du précipité.

Une quantité de 25 g du susdit précipité est mélangée avec 100 g d'une solution aqueuse de glycérine à 30%. Le lait obtenu est placé dans un pot en verre "twist-off" stérilisable.

L'ensemble est autoclavé à 120°C pendant 5 minutes. On recueille à chaud, après centrifugation:
- un surnageant contenant 96% des acides gras contenus dans le précipité, et
- une solution de β-cyclodextrine qui peut être utilisée à nouveau pour séparer un mélange d'acides gras.

## Revendications

1. Procédé de raffinage d'un mélange comprenant des complexes de cyclodextrine avec des composés lipophiles de type acides gras, caractérisé par le fait que l'on soumet ledit mélange à un traitement thermique à une température supérieure à 100°C en présence d'un système solvant comprenant de l'eau, la proportion dudit mélange à traiter étant comprise en sec entre 0,02 et 4 parties en poids par partie en poids de solvant, que l'on sépare ensuite les différentes fractions ou raffinats issus du traitement thermique et que l'on récupère enfin ces raffinats.

2. Procédé selon la revendication 1, caractérisé par le fait que la proportion respective en mélange de départ à traiter est de 0,10 à 1 parties en poids sec par partie en poids de solvant.

3. Procédé selon l'une des revendications 1 et 2, caractérisé par le fait que l'on agite le mélange à traiter au moins préalablement au traitement thermique et, de préférence, pendant toute la durée de ce dernier.

4. Procédé selon l'une des revendications 1 à 3, caractérisé par le fait que le traitement thermique est effectué à une température comprise entre 100 et 200°C, de préférence entre 100 et 150°C et, plus préférentiellement encore, entre 115 et 125°C.

5. Procédé selon la revendication 4, caractérisé par le fait que la durée du traitement thermique est de quelques secondes à quelques minutes, de préférence comprise entre 1 et 10 minutes et, plus préférentiellement encore, voisine de 5 minutes.

6. Procédé selon l'une des revendications 1 à 5, caractérisé par le fait que, préalablement au traitement thermique à une température supérieure à 100°C, on porte le mélange de départ à une température comprise entre 30 et 100°C en présence du système solvant et que l'on sépare ensuite du mélange les substances grasses les plus faiblement liées à la cyclodextrine ; les substances grasses, essentiellement les acides gras, plus fortement liées étant recueillies à l'issue du traitement thermique à une température supérieure à 100°C.

7. Procédé selon l'une des revendications 1 à 6, caractérisé par le fait que le traitement thermique est effectué en présence d'une solution aqueuse d'au moins un produit propre à améliorer les propriétés décomplexantes du système solvant et/ou à faciliter la séparation des constituants.

8. Procédé selon la revendication 7, caractérisé par le fait que le produit propre à améliorer les propriétés décomplexantes du système solvant et/ou à faciliter la séparation des constituants est choisi dans le groupe comprenant les polyols, les sucres et les alcools.

9. Procédé selon la revendication 8, caractérisé par le fait que le produit propre à améliorer les propriétés décomplexantes du système solvant et/ou faciliter la séparation des constituants est choisi dans le groupe comprenant le glycérol, le xylitol et le sorbitol, le glycérol étant préfére.

10. Procédé selon la revendication 9, caractérisé par le fait que le rapport eau/glycérol est compris entre 3:1 et 1:2 parties en poids, de préférence voisin de 1:1 parties en poids.

11. Procédé selon l'une des revendications 1 à 10, caractérisé par le fait qu'il est mis en oeuvre selon un mode de fonctionnement statique.

12. Procédé selon l'une des revendications 1 à 11, caractérisé par le fait qu'il est mis en oeuvre selon un mode de fonctionnement dynamique.

## Claims

1. A process of refining a mixture comprising complexes of cyclodextrin with lipophilic compounds of the fatty acid type, wherein the said mixture is subjected to a heat treatment at a temperature above 100°C in the presence of a solvent containing water, the proportion of said mixture to be treated being comprised on dry matter between 0.02 and 4 parts by weight of solvent, the various fractions or raffinates obtained from the heat treatment are then separated and these raffinates are finally recovered.

2. A process according to claim 1, wherein the respective proportion of starting mixture to be treated is from 0.10 to 1 part in dry weight by part by weight of solvent.

3. A process according to anyone of claims 1 or 2, wherein the mixture to be treated is stirred at least prior to the heat treatment and preferably for the whole duration of the latter.

4. A process according to anyone of claims 1 to 3, wherein the heat treatment is carried out a temperature from 100 to 200°C, preferably from 100 to 150°C and more preferably from 115 to 125°C.

5. A process according to claim 4, wherein the duration of the heat treatment is from several seconds to several minutes, preferably from 1 to 10 minutes and more preferably in the region of 5 minutes.

6. A process according to anyone of claims 1 to 5, wherein prior to the heat treatment at a temperature above 100°C, the starting mixture is heated to a temperature comprised between 30 and 100°C in the presence of the solvent system and the fatty substances which are least firmly linked to the cyclodextrin are then separated from the mixture, the fatty substances which are more firmly linked, essentially the fatty acids, being collected at the end of the heat treatment at a temperature above 100°C.

7. A process according to anyone of claims 1 to 6, wherein the heat treatment is carried out in the presence of an aqueous solution of at least one product suitable for improving the properties of decomplexation of the solvent system and/or for facilitating the separation of the components.

8. A process according to claim 7, wherein the product suitable for improving the properties of decomplexation of the solvent system and/or for facilitating the separation of the components is selected from the group comprising polyols, sugars and alcohols.

9. A process according to claim 8, wherein the product suitable for improving the decomplexating properties of the solvent system and/or for facilitating the separation of the components is selected from the group comprising glycerol, xylitol and sorbitol, glycerol being preferred.

10. A process according to claim 9, wherein the water/glycerol ratio is from 3:1 to 1:2 parts by weight, preferably in the region of 1:1 parts by weight.

11. A process according to anyone of claims 1 to 10, carried out by a static mode of operation.

12. A process according to anyone of claims 1 to 11, carried out by a dynamic mode of operation.

## Patentansprüche

1. Verfahren zur Raffinierung einer Cyclodextrin-Komplexe umfassenden Mischung mit fettsäureartigen lipophilen Verbindungen, dadurch gekennzeichnet, daß man die genannte Mischung einer thermischen Behandlung bei einer Temperatur von über 100 °C in Anwesenheit eines Lösungsmittel-Systems unterzieht, das Wasser umfaßt, wobei der Anteil der genannten, zu behandelnden Mischung zwischen 0,02 und 4 Teilen Trockengewicht pro Gewichtsteil Lösungsmittel beträgt, daß man anschließend die aus der thermischen Behandlung stammenden verschiedenen Fraktionen oder Raffinate abtrennt, und daß man schließlich diese Raffinate gewinnt.

2. Verfahren nach Anspruch 1, dadurch gekennzeichnet, daß der jeweilige Anteil in der zu behandelnden Ausgangsmischung 0,10 bis 1 Teile Trockengewicht pro Gewichtsteil Lösungsmittel beträgt.

3. Verfahren nach einem der Ansprüche 1 und 2, dadurch gekennzeichnet, daß man die zu behandelnde Mischung mindestens vor der thermischen Behandlung rührt, und vorzugsweise während der gesamten Dauer dieser Behandlung.

4. Verfahren nach einem der Ansprüche 1 bis 3, dadurch gekennzeichnet, daß die thermische Behandlung bei einer Temperatur zwischen 100 °C und 200 °C, vorzugsweise zwischen 100 °C und 150 °C, und ganz besonders bevorzugt zwischen 115 °C und 125 °C durchgeführt wird.

5. Verfahren nach Anspruch 4, dadurch gekennzeichnet, daß die Dauer der thermischen Behandlung einige Sekunden bis einige Minuten beträgt und vorzugsweise zwischen 1 und 10 Minuten, und ganz besonders bevorzugt, in der Nähe von 5 Minuten liegt.

6. Verfahren nach einem der Ansprüche 1 bis 5, dadurch gekennzeichnet, daß man die Ausgangsmischung vor der thermischen Behandlung bei einer Temperatur von mehr als 100 °C in Anwesenheit eines Lösungsmittel-Systems auf einer Temperatur zwischen 30 °C und 100 °C hält und daß man anschließend von der Mischung die am wenigsten an Cyclodextrin gebundenen Fettsubstanzen abtrennt, wobei die stärker gebundenen Fettsubstanzen, im wesentlichen die Fettsäuren, unmittelbar nach der thermischen Behandlung bei einer Temperatur von höher als 100 °C gewonnen werden.

7. Verfahren nach einem der Ansprüche 1 bis 6, dadurch gekennzeichnet, daß die thermische Behandlung in Anwesenheit einer wäßrigen Lösung von mindestens einem Produkt durchgeführt wird, das geeignet ist, die dekomplexierenden Eigenschaften des Lösungsmittel-Systems zu verbessern und/oder die Trennung der Bestandteile zu vereinfachen.

8. Verfahren nach Anspruch 7, dadurch gekennzeichnet, daß das Produkt, das geeignet ist, die dekomplexierenden Eigenschaften des Lösungsmittel-Systems zu verbessern und/oder die Trennung der Bestandteile zu vereinfachen, aus der Gruppe gewählt wird, die Polyole, Zucker und Alkohole umfaßt.

9. Verfahren nach Anspruch 8, dadurch gekennzeichnet, daß das Produkt, das geeignet ist, die dekomplexierenden Eigenschaften des Lösungsmittel-Systems zu verbessern und/oder die Trennung der Bestandteile zu vereinfachen, aus der Gruppe gewählt wird, die Glycerol, Xylitol und Sorbitol umfaßt, wobei Glycerol bevorzugt ist.

10. Verfahren nach Anspruch 9, dadurch gekennzeichnet, daß das Verhältnis Wasser/Glycerol zwischen 3:1 und 1:2 Gewichtsteilen, vorzugsweise in der Nähe von 1:1 Gewichtsteilen liegt.

11. Verfahren nach einem der Ansprüche 1 bis 10, dadurch gekennzeichnet, daß es in statischer Arbeitsweise durchgeführt wird.

12. Verfahren nach einem der Ansprüche 1 bis 11, dadurch gekennzeichnet, daß es in dynamischer Arbeitsweise durchgeführt wird.
